# EUROPEAN PATENT APPLICATION

(11) **EP 4 647 409 A1**
(43) Date of publication of application: **12.11.2025**
(21) Application number: 23914810.9
(22) Date of filing: 27.12.2023
(51) Int. Cl.: C04B 28/26, C04B 18/08, C04B 18/14, C04B 22/06, C04B 22/08, C04B 24/22

(54) **GEOPOLYMER COMPOSITION, GEOPOLYMER CURED BODY, AND PRODUCTION METHOD FOR GEOPOLYMER CURED BODY**

(30) Priority: 05.01.2023 JP 2023000433
(71) Applicant: Sika Technology AG, 6340 Baar (CH)
(72) Inventor: HOTTA, Masahiro, Kobe-shi Hyogo 651-2271 (JP); CHOWDHURY, Siddharth Roy, Suzhou 215121 (CN); CUI, Jing, Chigasaki-shi Kanagawa 253-0071 (JP)
(74) Representative: Sika Patent Attorneys
(86) International application number: PCT/JP2023/046889
(87) International publication number: WO 2024/147325

(57) **Abstract**

The present invention provides a geopolymer composition capable of achieving both good fluidity over a long period of time and high strength development of a cured body in a short period of time by a simple technique while suppressing the mixing amount of silica fume. The geopolymer composition is a geopolymer composition containing an active filler, aggregate, an activator, a dispersant, and added water, wherein the geopolymer composition contains no silica fume or contains silica fume in an amount of less than 1 mass% based on a total mass of the geopolymer composition, a total moisture content of the geopolymer composition is from 10 mass% to 13 mass%, the active filler contains coal ash and 35 mass% or more of ground granulated blast-furnace slag based on the total mass of the active filler, and the dispersant is a polycondensate-based dispersant that contains polyalkylene glycol monophenyl ether as a substructure.

## Description

### Technical Field

The present invention relates to a geopolymer composition, a geopolymer cured body which is a cured product of the geopolymer composition, and a method for producing the geopolymer cured body.

### Background Art

Cured bodies such as concrete, mortar, artificial stone, and hardened members for buildings generally contain cement. However, cement emits a large amount of CO₂ during firing. Therefore, there has been noticed a method for producing a cured body such as concrete, the method using no cement and being suitable from an environmental perspective. In particular, a method using a geopolymer technique for producing a cured body has been actively studied.

In the geopolymer technique, powder containing silicon or aluminum as a main component is used as a binder, and powders are bound together to produce an artificial rock. A geopolymer cured body formed by the geopolymer technique is produced by using an active filler as an aluminosilicate source and an alkali aqueous solution as an activator and thereby allowing to cause geopolymer reaction. As the active filler, natural products such as kaolin and clay, fly ash, silica fume, blast-furnace slag, chaff ash, and the like can be used. As the alkaline aqueous solution, an aqueous solution of sodium hydroxide, water glass (sodium silicate), or the like is used.

The main role of the active filler is to form a geopolymer cured body and to improve the strength the geopolymer cured body. Among active fillers, silica fume not only greatly contributes to the strength improvement of the geopolymer cured body in a short period of time, but also has a function of imparting good fluidity to the geopolymer composition over a long period of time immediately after kneading. Therefore, because of its high workability, silica fume is widely used in the production of the geopolymer cured body. For example, Patent Literature 1 describes a geopolymer composition containing ground granulated blast-furnace slag and fly ash as powder raw materials, fine aggregate, silica fume, potassium hydroxide or sodium hydroxide as an alkali source, and water, in which a volume ratio of the ground granulated blast-furnace slag to the powder raw materials: BFS/P is from 35 to 80%, a mole ratio of silicon contained in the silica fume to the alkali source: Si/A is from 0.05 to 0.35, and a mole ratio of the alkali source to water: A/W is from 0.1 to 0.3.

### Citation List

### Patent Literature

Patent Literature 1: JP 2021-066613 A

### Summary of Invention

An object of the present invention is to provide a geopolymer composition capable of achieving both good fluidity over a long period of time and high strength development of a cured body in a short period of time by a simple technique while suppressing the mixing amount of silica fume.

As a result of intensive studies to solve the above-described problems, the present inventors have accomplished the present invention. That is, the present invention includes the following preferred aspects.

A geopolymer composition according to a first aspect of the present invention is a geopolymer composition containing an active filler, aggregate, an activator, a dispersant, and added water,
wherein the geopolymer composition contains no silica fume or contains silica fume in an amount of less than 1 mass% based on a total mass of the geopolymer composition,
a total moisture content of the geopolymer composition is from 10 mass% to 13 mass%,
the active filler contains coal ash and 35 mass% or more of ground granulated blast-furnace slag based on a total mass of the active filler, and
the dispersant is a polycondensate-based dispersant that contains polyalkylene glycol monophenyl ether as a substructure.

A geopolymer cured body according to a second aspect of the present invention is a cured product of the geopolymer composition according to the first aspect.

A method for producing a geopolymer cured body according to a third aspect of the present invention includes a step of mixing and kneading the geopolymer composition according to the first aspect, and then curing the geopolymer composition.

### Brief Description of Drawings

FIG. 1 is a graph showing fluidity test results of geopolymer compositions in Examples.
FIG. 2 is a graph showing results of uniaxial compressive strength tests of cured products of geopolymer compositions in Examples.

### Description of Embodiments

Silica fume is contained as an active filler in almost all geopolymer compositions currently produced and developed. The geopolymer composition described in Patent Literature 1 also contains silica fume as an indispensable active filler component. On the other hand, silica fume has higher material cost as comparison with other active fillers. Therefore, silica fume is the reason for high cost in production of cured bodies of the geopolymer composition.

When the geopolymer composition does not contain silica fume at all or contains only a small amount of silica fume, the fluidity of the geopolymer composition immediately after kneading decreases, and it also becomes difficult to obtain a cured body having desired strength in a short period of time.

The decrease in fluidity of the geopolymer composition immediately after kneading causes the deterioration of the handling of the geopolymer composition at a manufacturing site of a cured body product. **In** order to compensate for such a decrease in fluidity of the geopolymer composition, there is conceivable a method to increase the moisture content contained in the activator or the amount of added water separately added. However, when the total moisture content in the geopolymer composition increases, problems may occur in which long-term curing is required to afford the strength of the cured body, bleeding occurs in the composition or in the cured body, or the strength of the produced cured body is insufficient, or the like. Alternatively, there is conceivable a method of using steam curing, in order to obtain desired strength in a short period of time, instead of normal curing such as underwater curing, moist curing, or atmospheric curing. However, the steam curing is costly, and hence the production cost becomes remarkably high.

As described above, when the mixing amount of silica fume in the geopolymer composition is suppressed to reduce production cost, various problems occur in terms of both the fluidity of the composition immediately after kneading and the strength of the cured body.

The present inventors have conducted various studies on a geopolymer composition capable of ensuring high fluidity over a long period of time while suppressing the mixing amount of silica fume and of affording a cured body with high strength in a short period of time by a simple technique. Thereupon, the present inventors have focused on the type and the mixing amount of an active filler, the type of a dispersant contained in the geopolymer composition and the total moisture content of the geopolymer composition, and thereby having completed the present invention.

According to the present invention, it is possible to provide a geopolymer composition capable of achieving both good fluidity over a long period of time and high strength development of a cured body in a short period of time by a simple technique while suppressing the mixing amount of silica fume.

Specifically, the geopolymer composition in the present embodiment includes an active filler, aggregate, an activator, a dispersant, and added water, and the geopolymer composition contains no silica fume or contains silica fume in an amount of less than 1 mass% based on the total mass of the geopolymer composition. The dispersant is a polycondensate-based dispersant that contains polyalkylene glycol monophenyl ether as a substructure. When the geopolymer composition contains such a specific type of dispersant, the total moisture content of the geopolymer composition required to ensure high fluidity over a long period of time can be reduced even if the mixing amount of the silica fume is 0 mass% or less than 1 mass%.

In addition, the geopolymer composition in the present embodiment contains ground granulated blast-furnace slag as an active filler in an amount of 35 mass% or more based on the total mass of the active filler. As will be described in detail later, the ground granulated blast-furnace slag more significantly contributes to the enhancement of the strength of the cured body as compared with other active fillers other than silica fume. Therefore, when a large amount of ground granulated blast-furnace slag is contained, a cured body with high strength can be obtained in a short period of time by normal curing without performing a complicated treatment such as steam curing. In other words, in the geopolymer composition in the present embodiment, a specific type of dispersant is blended, and the amount of the ground granulated blast-furnace slag as an active filler and the total moisture content of the composition are adjusted to appropriate amounts. As a result, even when the mixing amount of silica fume that leads to higher costs is suppressed, a suitable effect can be sustained in both the fluidity of the composition after kneading and the strength of the cured body. Note that, the active filler also includes coal ash. As the coal ash, there may be used coal ash subjected to a special pretreatment (specifically, treatment to conform to the standards of fly ash for use in concrete defined in JIS A 6201:2015) for making its quality uniform. However, even when coal ash not subjected to such a special pretreatment is used as the coal ash, such an effect of the geopolymer composition according to the present embodiment can be obtained.

In the present specification, the "water" means all water contained in the geopolymer composition in the present embodiment, such as water contained in the activator, water contained in the dispersant, optionally contained added water, and water contained in other optionally contained materials. Furthermore, in the present specification, the "total moisture content" (mass%) means the total amount (mass%) of the "water" as described above in the geopolymer composition in the present embodiment. Such a "total moisture content" (mass%) can be calculated by, as described in the following Examples, that the total solid content (mass%) of the components containing water is determined with a moisture analyzer and this total solid content is subtracted from the total amount (mass%) of the solution.

Moreover, in the present specification, the "added water" means water that is separately and optionally added, excluding the water contained in the activator, the water contained in the dispersant, and the water contained in other optionally contained materials. Specifically, the added water is separately added to the geopolymer composition in the present embodiment for the purpose of adjusting the fluidity of the geopolymer composition, promoting the migration of various ions contributing to the geopolymer reaction, and the like. Examples of the added water include, but are not limited to, tap water and ion-exchanged water.

Hereinafter, an embodiment of the present invention will be described in detail. Note that, the scope of the present invention is not limited to the embodiment described herein, and various modifications can be made without departing from the spirit of the present invention.

### 1. Geopolymer composition

The geopolymer composition in the present embodiment contains an active filler, aggregate, an activator, a dispersant, and added water. The dispersant is a polycondensate-based dispersant that contains polyalkylene glycol monophenyl ether as a substructure.

In the present embodiment, the aggregate contained in the geopolymer composition includes fine aggregate and/or coarse aggregate. That is, the geopolymer composition in the present embodiment can be used for both a geopolymer mortar composition that contains fine aggregate and does not contain coarse aggregate and a geopolymer concrete composition that contains fine aggregate and coarse aggregate.

The function of each component and the mixing amount thereof, the total moisture content of the geopolymer composition, and the method for preparing the geopolymer composition will be described in detail below. Note that, the mixing amount and the mixing ratio of each component of the geopolymer composition described below, for the most part, mean the mixing amount and the mixing ratio when the geopolymer composition is used as a geopolymer mortar composition unless otherwise specified. However, even when the geopolymer composition is used as a geopolymer concrete composition, the mixing amount and the mixing ratio of each component can be appropriately adjusted as necessary and can be adopted.

### <Active filler>

The active filler is powder containing aluminosilicate as a main component. Aluminosilicate has activity against alkalis. When an activator, added water or the like described later is added to the active filler, silicon and aluminum in the active filler are partially dissolved or ionized. After dissolution, the silica component present in a state close to that of a monomer in the alkali silica solution incorporates metal ions. As a result, a dehydration condensation reaction takes place, and a cured polymer compound (polymer) is produced to form a cured product of the geopolymer composition.

In the geopolymer composition in the present embodiment, the active filler is not particularly limited as long as it contains coal ash and 35 mass% or more of ground granulated blast-furnace slag based on the total mass of the active filler. The type of the coal ash is not particularly limited, and coal ash not subjected to a treatment to conform to the standards of fly ash for use in concrete defined in JIS A 6201:2015 may be used, or coal ash subjected to such a treatment may be used. For example, the active filler can include, besides the ground granulated blast-furnace slag and the coal ash, one or more of any active fillers having the above-described functions, which are known to those skilled in the art. In the geopolymer composition in the present embodiment, silica fume may be contained as the active filler, but the mixing amount thereof is less than 1 mass% based on the total mass of the geopolymer composition. These active fillers will be described in detail below.

### (Coal ash)

Coal ash contains silicon dioxide (SiO₂), alumina (Al₂O₃), and the like, as main components. As described above, in the present embodiment, the type of the coal ash is not particularly limited. Specifically, the coal ash may include coal ash produced as an industrial byproduct (hereinafter, also referred to as "untreated coal ash") not subjected to treatment to conform to the standards of fly ash for use in concrete specified in JIS A 6201:2015, may include coal ash subjected to such treatment, or may be a mixture of these types of coal ash. Among these, coal ash preferably includes the untreated coal ash. The untreated coal ash is coal ash not subjected to a treatment other than normal pulverization or the like for the purpose of transportation from a production site, or the like, or is coal ash as raw powder. When the untreated coal ash is used as the active filler, the coal ash as an industrial byproduct can be efficiently and effectively utilized as an untreated resource. Furthermore, the production cost can also be reduced. Such untreated coal ash can be obtained, for example, as an industrial byproduct produced during coal combustion from a thermal power plant, a boiler, or the like.

In the present specification, the "coal ash not subjected to a treatment to conform to the standards of fly ash for use in concrete defined in JIS A 6201:2015" is, in other words, coal ash not subjected to comminution treatment and/or particle size adjustment (preferably particle size adjustment). Alternatively, for example, "coal ash not subjected to a treatment to conform to the standards of fly ash for use in concrete defined in JIS A 6201:2015" is, in other words, coal ash having a Blaine specific surface area of the order of 2900 cm²/g to 6000 cm²/g and not subjected to comminution treatment and/or particle size adjustment (preferably particle size adjustment). Alternatively, for example, "coal ash not subjected to a treatment to conform to the standards of fly ash for use in concrete defined in JIS A 6201:2015" is, in other words, preferably coal ash (untreated coal ash) produced as an industrial byproduct from at least one of a thermal power plant and a boiler. Note that, in one embodiment, the "coal ash not subjected to a treatment to conform to the standards of fly ash for use in concrete defined in JIS A 6201:2015" may be coal ash that does not conform to the specifications of fly ash for use in concrete defined in JIS A 6201:2015, or may include coal ash that does not conform to the specifications.

Specifically, the coal ash, preferably the untreated coal ash, includes, for example, fly ash captured from exhaust gas through a dust collector, bottom ash that is a pulverized agglomeration of ash at the bottom of a boiler, and the like. As the coal ash, preferably as the untreated coal ash, two or more types of coal ash may be used in combination.

According to the geopolymer composition according to the present embodiment, there can be obtained effects of good high fluidity of the geopolymer composition itself over a long period of time and high strength development of a cured body in a short period of time. In particular, even when untreated coal ash is contained as the active filler, a similar effect can be obtained. In other words, even when the size, composition, and the like of the coal ash to be used are not homogeneous and there is some variation in its quality, the above-described effect can be obtained.

The mixing amount of the coal ash based on the total mass of the active filler is not particularly limited as long as it meets the condition of the mixing amount of the ground granulated blast-furnace slag described later. For example, the mixing amount of the coal ash is preferably from 3 mass% to 65 mass% based on the total mass of the active filler. Even when the coal ash contains untreated coal ash, the mixing amount of the untreated coal ash is preferably from 3 mass% to 65 mass% based on the total mass of the active filler. When the mixing amount of the untreated coal ash is 3 mass% or more, the untreated coal ash produced as an industrial byproduct can be effectively utilized as a resource, and there can be obtained a geopolymer composition suitable from environmental and cost perspectives. In addition, when the mixing amount of the untreated coal ash is 65 mass% or less, there is no shortage of the mixing amount of the ground granulated blast-furnace slag, and thus a cured body having desired high strength can be obtained in a short period of time.

The mixing amount of the coal ash based on the total mass of the active filler is more preferably 23 mass% or more, still more preferably 50 mass% or more. In addition, even when the coal ash contains the untreated coal ash, the mixing amount of the untreated coal ash is more preferably from 23 mass% or more, and still more preferably from 50 mass% or more based on the total mass of the active filler. Note that, when the coal ash contains, as the active filler, both the untreated coal ash and the coal ash subjected to a treatment to conform to the standards of fly ash for use in concrete defined in JIS A 6201:2015, the coal ash subjected to the treatment is preferably contained, for example, in an amount of about 5 mass% based on the total mass of the active filler.

### (Ground granulated blast-furnace slag)

The ground granulated blast-furnace slag contains calcium oxide (CaO), silicon dioxide (SiO₂), alumina (Al₂O₃), and the like as main components.

As the ground granulated blast-furnace slag, any ground granulated blast-furnace slag known to those skilled in the art can be used. For example, ground granulated blast-furnace slag can be obtained by finely grinding granulated blast-furnace slag. Granulated blast-furnace slag is obtained as a byproduct in refining iron in blast furnaces. Alternatively, as the ground granulated blast-furnace slag, commercially available ground granulated blast-furnace slag may be used. As the commercially available ground granulated blast-furnace slag, for example, ground granulated blast-furnace slag that meets the specifications of the ground granulated blast-furnace slag 4000 of JIS A 6206 can be used. Examples of such commercially available ground granulated blast-furnace slag includes "Keiment" sold by Kobelco Slag Products, Ltd., and "Esment" available from Nippon Steel Blast Furnace Slag Cement Co., Ltd.

In the geopolymer composition in the present embodiment, the mixing amount of the ground granulated blast-furnace slag is 35 mass% or more based on the total mass of the active filler. When the mixing amount of the ground granulated blast-furnace slag is 35 mass% or more, there can be compensated an influence on the strength of the cured body due to suppression of the mixing amount of the silica fume. As a result, high strength of the cured body can be exhibited in a short period of time even by a simple technique. Furthermore, industrial byproducts can be effectively utilized as resources, and a geopolymer composition suitable from environmental and cost perspectives can be obtained.

The mixing amount of the ground granulated blast-furnace slag is preferably 36 mass% or more, and more preferably 37 mass% or more based on the total mass of the active filler.

The present inventors have confirmed that when the mixing ratio of the ground granulated blast-furnace slag to the total amount of the active fillers is increased, the strength of the cured body can be further improved as compared with the case where the mixing ratio of other types of active fillers such as coal ash (preferably untreated coal ash) is increased. According to experiments by the present inventors, it has been found that this is not due to a difference in the structure of eventually produced cured bodies. More specifically, the present inventors have used geopolymer compositions with different mixing ratios between the coal ash (preferably untreated coal ash) and the ground granulated blast-furnace slag and have made a comparison between a structure around Si atoms of a cured body containing the ground granulated blast-furnace slag more than the coal ash and a structure around Si atoms of a cured body containing the coal ash (preferably untreated coal ash) more than the ground granulated blast-furnace slag by NMR analysis. As a result, there was no differences in peak position and peak width in the spectra. On the other hand, the peak intensity was higher in the spectrum of the cured body containing the ground granulated blast-furnace slag more than the coal ash. Therefore, it has been found that a cured body having a similar structure is produced, but the amount of the product is different when the mixing ratio between the coal ash and the ground granulated blast-furnace slag is changed.

This result predicts that the reason why the ground granulated blast-furnace slag has a more significant influence on the strength of the cured body is that the ground granulated blast-furnace slag has higher reactivity than other types of active fillers such as coal ash (preferably untreated coal ash). This prediction can be estimated, for example, from a percentage of glass content that can be one of indicators of reactivity. Specifically, commonly used ground granulated blast-furnace slag has a percentage of glass content of 99%, while coal ash (preferably untreated coal ash) has a percentage of glass content of about from 70% to 80%. Therefore, the percentage of glass content of the ground granulated blast-furnace slag contained in the geopolymer composition of the present embodiment is preferably 99% or more, and the percentage of glass content of the coal ash (preferably untreated coal ash) is preferably from 70% to 80%.

The upper limit of the mixing amount of the ground granulated blast-furnace slag based on the total mass of the active filler is not particularly limited. For example, the mixing amount of the ground granulated blast-furnace slag may be 100%. The mixing amount of the ground granulated blast-furnace slag is preferably 77 mass% or less, and more preferably 50 mass% or less based on the total mass of the active filler. When the mixing amount of the ground granulated blast-furnace slag is adjusted to 77 mass% or less, an excessive early strengthening of the geopolymer composition can be prevented.

### (Silica fume)

Silica fume contains silicon dioxide (SiO₂) as a main component. Specifically, silica fume is amorphous spherical fine particles of high-purity silicon dioxide (SiO₂).

As the silica fume, any silica fume known to those skilled in the art can be used. For example, silica fume is obtained as a byproduct of collecting dust in exhaust gas generated when producing ferrosilicon, metal silicon, electrolytic zirconia, or the like. Alternatively, commercially available silica fume may be used.

The silica fume has not only a function as a normal active filler, that is, a function that serves as a starting point of dehydration-condensation polymerization reaction and leads to an improvement in the strength of the cured body, but also a function of enhancing the fluidity of the geopolymer composition after preparation. This is because silica fume has a spherical shape.

The geopolymer composition in the present embodiment contains no silica fume or contains silica fume only in an amount of less than 1 mass% based on the total mass of the geopolymer composition. When the mixing amount of silica fume is adjusted to less than 1 mass%, the production cost of the geopolymer composition can be suppressed. Furthermore, according to the geopolymer composition in the present embodiment, while the mixing amount of silica fume is reduced, an industrial byproduct such as ground granulated blast-furnace slag (and untreated coal ash) can be more effectively utilized as an alternative of silica fume. Therefore, there can be obtained a geopolymer composition that is preferred from environmental and cost perspectives.

The mixing amount of the silica fume is preferably 0.5 mass% or less, and more preferably 0.1 mass% or less based on the total mass of the geopolymer composition. In particular, it is more preferable that the geopolymer composition in the present embodiment contains no silica fume.

### (Other active fillers)

Examples of other active fillers that can be contained in the geopolymer composition in the present embodiment include red mud, feldspar, mica, zeolite, perlite, clay mineral, kaolin, metakaolin, and sewage sludge.

The total mixing amount (mass%) of the active filler based on the total mass of the geopolymer composition can be determined by its ratio to the mixing amount of an activator in the geopolymer composition. Specifically, when an alkaline aqueous solution in an amount of, for example, about from 8 mol/L to 10 mol/L is used as the activator, the ratio of the mixing amount of the activator to the total mixing amount of the active filler (i.e., activator (mass)/active filler (total mass)) is preferably from 5% to 30%. In this case, when the activator (mass)/active filler (total mass) is 5% or more, the dehydration condensation reaction of the active filler is allowed to occur adequately, and eventually, a geopolymer cured body having sufficient strength can be obtained. Also, in this case, when the activator (mass)/active filler (total mass) is 30% or less, it is possible to prevent false set caused by an excessive amount of the activator.

Similarly, in this case, the activator (mass)/active filler (total mass) is more preferably 10% or more, still more preferably 15% or more. Also, in this case, the activator (mass)/active filler (total mass) is more preferably 25% or less, still more preferably 20% or less.

The above-mentioned preferred ratio varies to a certain extent depending on the type and concentration of an activator, and the activator (mass)/active filler (total mass) is required to be appropriately adjusted to the extent that the active filler adequately reacts and no false set occurs.

In addition, the total mixing amount (mass%) of the active filler based on the total mass of the geopolymer composition also varies depending on the type of the geopolymer cured body that is a final product. Therefore, the total mixing amount of the active filler is required to be appropriately adjusted according to the type of a desired geopolymer cured body. For example, the total mixing amount of the active filler is about from 20 mass% to 60 mass% based on the total mass of the geopolymer composition. Examples of the type of the geopolymer cured body include mortar and concrete as described above.

### <Aggregate>

As the aggregate, any aggregate known to those skilled in the art can be used. For example, there can be used a typical known aggregate used in manufacturing concrete, mortar, artificial stone, or the like.

As the aggregate, either coarse aggregate or fine aggregate may be used. The coarse aggregate is aggregate 85% or more of which has a diameter of 5 mm or more. The fine aggregate is aggregate 85% or more of which has a diameter of 5 mm or less. The type of aggregates is required to be appropriately selected according to the intended use of the geopolymer cured body that is a final product. For example, two or more types of aggregates such as a combination of coarse aggregate and fine aggregate may be used.

Examples of the fine aggregate include fine aggregate such as blast-furnace slag fine aggregate and typical silica sand that is natural aggregate. Among them, the blast-furnace slag fine aggregate is preferably used. The blast-furnace slag fine aggregate has latent hydraulic property. The latent hydraulic property is a property that the strength of a cured product is increased through generation of a hydrate due to silicon dioxide (SiO₂), alumina (Al₂O₃), and the like contained in the blast-furnace slag fine aggregate. Therefore, when the blast-furnace slag fine aggregate is used as the aggregate, the long-term strength of the geopolymer cured body that is a final product can be further increased.

The blast-furnace slag fine aggregate is defined in JIS A 5011-1:2018. Alternatively, as the blast-furnace slag fine aggregate, commercially available blast-furnace slag fine aggregate may be used. Examples of commercially available blast-furnace slag fine aggregate include "Shinkosand" sold by Kobelco Slag Products, Ltd., and blast-furnace slag fine aggregate available from JFE Mineral & Alloy Company, Ltd.

As the coarse aggregate, it is preferable to use blast-furnace slag coarse aggregate made of blast-furnace slag as the raw material. When the blast-furnace slag coarse aggregate and/or the above-described blast-furnace slag fine aggregate is used as the aggregate, industrial byproducts can be effectively utilized as resources, and a geopolymer composition with high environmental compatibility can be obtained. Furthermore, the production cost can also be reduced.

The mixing amount of the aggregate (preferably, fine aggregate) based on the total mass of the geopolymer composition is not particularly limited, so long as it is adjusted according to the intended use of the geopolymer cured body that is a desired final product. For example, the mixing amount of the aggregate (preferably, fine aggregate) based on the total mass of the geopolymer composition is preferably from 30 mass% to 70 mass%. When the mixing amount of the aggregate (preferably, fine aggregate) is 30 mass% or more, separation of the aggregate from the paste of the geopolymer composition can be prevented, and formation of a uniform cured body can be facilitated. When the mixing amount of the aggregate (preferably, fine aggregate) is 70 mass% or less, good fluidity of the geopolymer composition over a long period of time is easily sustained.

The mixing amount of the aggregate (preferably, fine aggregate) based on the total mass of the geopolymer composition is more preferably 40 mass% or more, and still more preferably 50 mass% or more. In addition, the mixing amount of the aggregate (preferably, fine aggregate) based on the total mass of the geopolymer composition is more preferably 65 mass% or less, and still more preferably 60 mass% or less.

### <Added water>

The type of the added water is not particularly limited, and examples thereof include tap water and ion-exchanged water. Furthermore, the pH, temperature, and the like of the added water are also freely chosen, so long as it is appropriately adjusted to typical numerical values according to the type of each component contained in the geopolymer composition, the content thereof, and the like.

The added water contributes to the fluidity of the geopolymer composition. The geopolymer composition in the present embodiment contains a certain type of dispersant that significantly enhances the fluidity of the compositions described below. Therefore, the content of the added water required is only a small amount.

On the other hand, since the content of silica fume is suppressed in the geopolymer composition in the present embodiment, the total moisture content is required to be adjusted to be within a range of 10 mass% to 13 mass% as described in detail later. Therefore, the content of the added water based on the total mass of the geopolymer composition needs to be appropriately adjusted so the total moisture content as to be within a range of 10 mass% to 13 mass% according to the amount (mass%) of water contained in the activator and the amount (mass%) of water contained in the dispersant. Specifically, the content of the added water is preferably 4.5 mass% or more, more preferably 5 mass% or more, and still more preferably 6 mass% or more based on the total mass of the geopolymer composition. In addition, the content of the added water is preferably 7.8 mass% or less, more preferably 7.6 mass% or less, and still more preferably 7.3 mass% or less.

### <Activator>

The activator is a component that serves as a starting point of polymerization by dehydration condensation reaction of the active filler. Specifically, the activator is an alkali aqueous solution that comes into contact with aluminosilicate in the active filler and dissolves silicon and aluminum. The activator is not particularly limited as long as it is a commonly used activator, and for example, there can be used an aqueous solution of sodium hydroxide, water glass (sodium silicate), potassium silicate, or the like. Alternatively, as the activator, a commercially available activator that contains an alkali source may be used. Examples of such commercially available activators include MasterCrete AC series available from Pozzolith Solutions Ltd.

The concentration of the alkali aqueous solution as the activator needs to be appropriately adjusted according to the type and the mixing amount thereof, and is preferably, for example, from 6 mol/L to 12 mol/L. When the concentration of the activator is 6 mol/L or more, the dehydration condensation reaction in the active filler is allowed to occur adequately. When the concentration of the activator is 12 mol/L or less, generation of excessive heat of fusion due to high concentration can be avoided.

The concentration of the alkali aqueous solution as the activator needs to be appropriately adjusted according to the type and the mixing amount thereof, but is more preferably 7 mol/L or more, and still more preferably 8 mol/L or more. In addition, the concentration of the alkali aqueous solution as the activator needs to be appropriately adjusted according to the type and the mixing amount thereof, but is more preferably 11 mol/L or less, and still more preferably 10 mol/L or less.

The mixing amount (mass%) of the activator based on the total mass of the geopolymer composition can be determined in the same manner as described above from its ratio to the total mixing amount (mass%) of the active filler in the geopolymer composition.

At the same time, the amount (mass%) of water contained in the activator can be appropriately adjusted so the total moisture content as to be within the range of 10 mass% to 13 mass% according to the mixing amount (mass%) of the added water and the amount (mass%) of water contained in the dispersant.

### <Dispersant>

The geopolymer composition in the present embodiment contains a polycondensate-based dispersant that contains polyalkylene glycol monophenyl ether as a substructure. Specifically, this dispersant is a polycondensate-based dispersant in which polyalkylene glycol monophenyl ether in a state of an aqueous solution is contained as a substructure (herein, simply referred to as a "dispersant" even in the state of aqueous solution).

This dispersant is contained in the geopolymer composition, thereby particles in the geopolymer composition can be dispersed to slow down the curing reaction of the composition. In addition, the action of this dispersant to slow down the curing reaction loses its effect in a few hours. Therefore, when the geopolymer composition contains this dispersant, there can be realized both the high fluidity sustention over a long period of time and the high strength development in a short period of time.

In the present specification, the "polycondensate-based dispersant that contains polyalkylene glycol monophenyl ether as a substructure (specifically, a polycondensate-based dispersant in which polyalkylene glycol monophenyl ether in a state of an aqueous solution is contained as a substructure)" is not particularly limited as long as it is an aqueous solution of a polymer having the above-described action and having a defined structure. Examples of such a dispersant include a polymer aqueous solution containing a polycondensate that contains a constitutional unit A, a constitutional unit B, a constitutional unit C and a constitutional unit D set forth below.

Constitutional unit A: At least one polyethylene glycol monophenyl ether represented by Formula (1) set forth below.

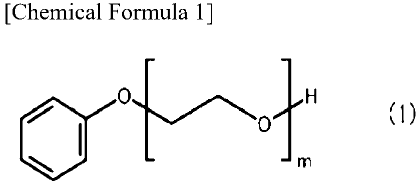

[In Formula (1), m is an integer of 3 to 280]

Constitutional unit B: A cyclic compound having at least one hydroxyl group and a derivative thereof. For example, at least one aromatic compound selected from the group consisting of benzene-1,2-diol, benzene-1,2,3-triol, 2-hydroxybenzoic acid, 2,3-dihydroxybenzoic acid, 3,4-dihydroxybenzoic acid, 3,4,5-trihydroxybenzoic acid, 3-hydroxyphthalic acid, 2,3-dihydroxybenzenesulfonic acid, 3,4-dihydroxybenzenesulfonic acid, 1,2-dihydroxynaphthalene, 2,3-dihydroxynaphthalene, 1,2-dihydroxynaphthalene-5-sulfonic acid, 1,2-dihydroxynaphthalene-6-sulfonic acid, 2,3-dihydroxynaphthalene-5-sulfonic acid, 2,3-dihydroxynaphthalene-6-sulfonic acid, and mixtures thereof.

Constitutional unit C: Polyethylene glycol monophenyl ether in which the number of repetitions of phenol or ethylene oxide is 1 or 2, or a phenoxyethyl derivative that contains phosphate or phosphonate. For example, at least one other aromatic compound selected from the group consisting of phenol, 2-phenoxyethanol, 2-phenoxyethyl phosphate, 2-phenoxyethyl phosphonate, 2-phenoxyacetic acid, 2-(2-phenoxyethoxy)ethanol, 2-(2-phenoxyethoxy)ethyl phosphate, 2-(2-phenoxyethoxy)ethyl phosphonate, 2-[4-(2-hydroxyethoxy)phenoxy]ethyl phosphate, 2-[4-(2-hydroxyethoxy)phenoxy]ethyl phosphonate, 2-[4-(2-phosphonatooxyethoxy)phenoxy]ethyl phosphate, 2-[4-(2-phosphonatooxyethoxy)phenoxy]ethyl phosphonate, methoxyphenol, and mixtures thereof.

Constitutional unit D: Aldehydes. For example, at least one aldehyde selected from the group consisting of formaldehyde, paraformaldehyde, glyoxylic acid, benzaldehyde, benzaldehyde sulfonic acid, benzaldehyde disulfonic acid, vanillin, isovanillin, and mixtures thereof.

The mixing amount (mass%) of the dispersant (aqueous solution) based on the total mass of the geopolymer composition is appropriately adjusted according to the type, the concentration thereof, and the like, and is preferably from 0.5 mass% to 3.5 mass%. When the mixing amount (mass%) of the dispersant (aqueous solution) is 0.5 mass% or more, the action of the dispersant described above can be favorably exhibited, and both high fluidity over a long period of time and high strength development in a short period of time can be more reliably achieved. When the mixing amount (mass%) of the dispersant (aqueous solution) is 3.5 mass% or less, the separation of the geopolymer composition and the occurrence of bleeding due to the addition of an excessive dispersant can be inhibited.

The mixing amount (mass%) of the dispersant (aqueous solution) is more preferably 0.8 mass% or more, still more preferably 0.85 mass% or more based on the total mass of the geopolymer composition. In addition, the mixing amount (mass%) of the dispersant (aqueous solution) is more preferably 2.5 mass% or less, and still more preferably 2.0 mass% or less.

The concentration (aqueous solution concentration) of the dispersant and the mixing amount (mass%) thereof is required to be appropriately adjusted so the total moisture content of the geopolymer composition in the present embodiment as to be within the range of 10 mass% to 13 mass%. In other words, the amount (mass%) of water contained in the dispersant is required to be appropriately adjusted so the total moisture content as to be within the range of 10 mass% to 13 mass% according to the mixing amount (mass%) of the added water and the amount (mass%) of water contained in the activator.

### <Other materials>

The geopolymer composition in the present embodiment may contain any material that can be generally added as a raw material for mortar, concrete, or the like as long as the effect of improving fluidity and strength is not compromised. For example, an inert filler that is powder having no activity against alkali, various additives, and the like may be contained. Examples of the inert filler include cement and calcium carbonate. The various additives are not particularly limited, and examples thereof include traditionally known components such as a superplasticizer, a shrinkage reducer, a corrosion inhibitor, a waterproof material, an antifoaming agent, a dust reducer, and a pigment.

### <Total moisture content of geopolymer composition>

The total moisture content of the geopolymer composition in the present embodiment is from 10 mass% to 13 mass%. When the total moisture content is adjusted to 10 mass% or more, there can be compensated the influence on the fluidity of the composition due to suppression of the mixing amount of silica fume. As a result, good fluidity of the geopolymer composition over a long period of time can be sustained. When the total moisture content is adjusted to 13 mass% or less, occurrence of bleeding can be reduced, and a desired cured body having a high strength can be obtained in a short period of time.

The total moisture content is preferably 10.5 mass% or more, more preferably 11 mass% or more, still more preferably 11.5 mass% or more, and particularly preferably 11.8 mass% or more. In addition, the total moisture content is preferably 12.8 mass% or less, more preferably 12.5 mass% or less, and still more preferably 12.3 mass% or less.

The total moisture content of the geopolymer composition can be adjusted to be within the range of 10 mass% to 13 mass% by adjusting the mixing amount (mass%) of the added water, the amount (mass%) of water contained in the activator, and the amount (mass%) of water contained in the dispersant to respective appropriate values, as described above. In particular, by appropriately varying the mixing amount (mass%) of the added water, the total moisture content can be easily adjusted to be within the range.

### <Method for preparing geopolymer composition>

The geopolymer composition in the present embodiment can be prepared by any method known to those skilled in the art. For example, a method for preparing the geopolymer composition includes a powder mixing step and a subsequent kneading step. In the powder mixing step, an active filler (e.g., an active filler containing coal ash (preferably containing untreated coal ash) and ground granulated blast-furnace slag) and aggregate, which are the main powder raw materials, are mixed in a predetermined mixing amount. In the subsequent kneading step, water, an activator, and a dispersant in predetermined mixing amounts are further added to the powder mixture, and the mixture is mixed and kneaded. The mixing method and the kneading method are not particularly limited, and there can be used any method, with use of a mixer or the like, known to those skilled in the art.

Alternatively, in the above-described method for preparing a geopolymer composition, a powder mixture that is a mixture of predetermined mixing amounts of main powder raw materials, which are an active filler (e.g., an active filler containing coal ash (preferably containing untreated coal ash) and ground granulated blast-furnace slag) and aggregate, is prepared in advance, and the prepared powder mixture may be used as a premix geopolymer composition. Specifically, before construction, work, or the like, predetermined mixing amounts of water, an activator, and a dispersant are added to the premix geopolymer composition and mixed and kneaded. By doing this, the geopolymer composition in any desired amount can be easily prepared at job site.

According to the geopolymer composition in the present embodiment, there can be achieved both good fluidity over a long period of time and high strength development of a cured body in a short period of time by a simple technique. When good fluidity is ensured over a long period of time, the geopolymer composition can be handled well at the manufacturing site of the cured body product. When a high strength development of the cured body is possible in a short period of time by a simple technique, even without performing long-term curing or costly steam curing, a cured body having equivalent strength can be obtained by normal curing such as atmospheric curing or sealed curing, for example. In addition, according to the geopolymer composition in the present embodiment, the ground granulated blast-furnace slag, which is an industrial byproduct, can be efficiently and effectively utilized while suppressing the mixing amount of silica fume that leads to higher costs. Therefore, it is advantageous in terms of production cost reduction and environmental load reduction.

### 2. Geopolymer cured body and method for producing geopolymer cured body

The geopolymer cured body in the present embodiment is a cured product of the geopolymer composition in the above-described embodiment. The geopolymer cured body has any shape that can be formed by any molding method, construction method, or the like. In short, such a geopolymer cured body can be produced by a method including a step of mixing and kneading the geopolymer composition in the foregoing embodiment, and then curing the geopolymer composition, as described above. Specifically, the geopolymer cured body can be produced by the following method. First, the geopolymer composition after mixing, kneading, and preparation is molded or applied by using any method known to those skilled in the art, for example, molding with a mold, trowel in plastering work, spraying, and pasting. Thereafter, even without performing complicated treatment such as steam curing, normal curing such as atmospheric curing or sealed curing is performed to the geopolymer composition after molding or application and thereby enabling to produce a high-strength geopolymer cured body in a short period of time.

Moreover, when using a mold to produce a geopolymer cured body from the geopolymer composition in the above-described embodiment, a release agent or the like is preferably applied in advance to the mold. The release agent is not particularly limited as long as it is any release agent, known to those skilled in the art, which imparts releasability to the geopolymer composition after curing (i.e., a geopolymer cured body).

The geopolymer cured body in the present embodiment is not particularly limited, and examples thereof include blocks for roads or for seawall, blocks such as for storm drainage system or for irrigation channels, precast products such as tiles, bricks, sewer conduits, piles, poles, and crossties, and cast-in-place products such as cast-in-place concrete, shotcrete, concrete patching, and dam concrete.

The present description discloses various aspects of technologies as described above, and the main technologies thereof are summarized below.

A geopolymer composition according to a first aspect of the present invention is a geopolymer composition containing an active filler, aggregate, an activator, a dispersant, and added water,
wherein the geopolymer composition contains no silica fume or contains silica fume in an amount of less than 1 mass% based on a total mass of the geopolymer composition,
a total moisture content of the geopolymer composition is from 10 mass% to 13 mass%,
the active filler contains coal ash and 35 mass% or more of ground granulated blast-furnace slag based on a total mass of the active filler, and
the dispersant is a polycondensate-based dispersant that contains polyalkylene glycol monophenyl ether as a substructure.

In the geopolymer composition described above, the geopolymer composition preferably contains no silica fume.

A geopolymer cured body according to a second aspect of the present invention is a cured product of the geopolymer composition according to the first aspect.

A method for producing a geopolymer cured body according to a third aspect of the present invention includes a step of mixing and kneading the geopolymer composition according to the first aspect, and then curing the geopolymer composition.

### Examples

Hereinafter, the present invention will be described more specifically with reference to Examples, but the present invention is not limited by the Examples at all.

In the present Examples, various geopolymer compositions having different mixing ratios of raw materials were actually prepared, and evaluations for the geopolymer compositions (fluidity test of the geopolymer compositions, bleeding test of the geopolymer compositions and uniaxial compressive strength test of cured products of the geopolymer compositions) were carried out.

### 1. Preparation of geopolymer composition

The raw materials of the geopolymer compositions of Examples and Comparative Examples and the preparation methods thereof will be described in detail below.

### [Raw material for geopolymer composition]

The raw materials for the geopolymer compositions used in Examples and Comparative Examples are as follows.
- Coal ash (untreated coal ash): Coal ash, as an industrial byproduct, collected in a thermal power plant, was used just as it was. Specifically, there was used a mixture of fly ash captured by an electric dust collector and bottom ash that was deposited and grown in a boiler and then crushed by a crusher. That is, the untreated coal ash was used just as it was without performing strict pretreatment (in other words, treatment for conforming to the standard of fly ash for use in concrete defined in JIS A 6201:2015) to ensure uniform quality.
- Ground granulated blast-furnace slag: "Keiment" (specific surface area: approximately 4700 cm²/g) available from Kobelco Slag Products, Ltd.
- Silica fume: "MasterCrete SF 5000" available from Pozzolith Solutions Ltd., bulk density: 2.2 g/cm³
- Aggregate (blast-furnace slag fine aggregate): "Shinkosand" available from Kobelco Slag Products, Ltd., (maximum particle size: 2.5 mm, mass fraction passing through sieve: 55% in a case of nominal sieve size being 0.6 mm)
- Added water: Tap water
- Activator (aqueous solution): "MasterCrete AC 5025" available from Pozzolith Solutions Ltd.
- Dispersant (aqueous solution): Aqueous solution of the compound described in Example 5 of JP 6290176 B2 (The aqueous solution of this compound can be produced by the following method. First, into a heatable reactor equipped with a stirrer and a metering pump are put 300 parts by mass of poly(ethylene oxide) monophenyl ether (average molecular weight: 2000 g/mol), 46.2 parts by mass of 3,4-dihydroxybenzoic acid, 33 parts by mass of 2-phenoxyethyl phosphate, and 19.9 parts by mass of paraformaldehyde at 90°C under nitrogen. Subsequently, this reaction mixture is heated to 110°C with stirring, and then 41 parts by mass of methanesulfonic acid (70%) is added within 25 minutes to ensure that the reaction temperature does not exceed 115°C. After metering, this reaction mixture is stirred at 110°C for another 2.5 hours. Thereafter, the reaction mixture is cooled and mixed with 350 parts by mass of water and the mixture is heated at 100°C for 30 minutes. Finally, the mixture is neutralized with 50% caustic soda solution to make the pH value about 7.0.)

### [Method for preparing geopolymer composition]

The raw materials shown in Table 1 below were blended in respective mass% (based on the total mass of the composition) to prepare the geopolymer compositions in Examples 1 and 2 and Comparative Examples 1 to 4. Specifically, first, coal ash (untreated coal ash) as an active filler and ground granulated blast-furnace slag in respective mixing amounts shown in Table 1 below were mixed. In Comparative Example 1, silica fume was also added as an active filler and then mixed. Then, blast-furnace slag fine aggregate as aggregate was further added to the mixed powder and then mixed. Finally, tap water as added water, activator (aqueous solution) and dispersant (aqueous solution) at respective mixing amounts were added to the mixture and then mixed with a Hobart mixer.

The total moisture content in the geopolymer composition was calculated by summing up the amount (mass%) of tap water as added water, the amount (mass%) of water contained in the activator, and the amount (mass%) of water contained in the dispersant. The amount (mass%) of water contained in the activator and the amount (mass%) of water contained in the dispersant were determined by subtracting the respective solid content (mass%) from the amount (mass%) of the respective aqueous solution of the activator or of the dispersant. The solid content (mass%) was determined by evaporating to dryness at 110°C for about 15 minutes with a moisture analyzer ("MX-50") available from A&D Company, Limited.

**[Table 1]**

| | Mixing ratio in geopolymer composition (mass%) | | | | | | | Total moisture content in geopolymer composition (mass%) |
|---|---|---|---|---|---|---|---|---|
| | Active filler | | | Blast-furnace slag fine aggregate | Tap water | Activator | Dispersant | |
| | Coal ash | Ground granulated blast-furnace slag (mixing amount based on total mass of active filler) | Silica fume | | | | | |
| Example 1 | 19.8 | 13.2 (40 mass%) | 0.0 | 53.0 | 7.3 | 5.6 | 1.1 | 12.3 |
| Example 2 | 19.8 | 13.2 (40 mass%) | 0.0 | 53.5 | 6.7 | 5.6 | 1.2 | 11.8 |
| Comparative Example 1 | 21.8 | 8.8 (26 mass%) | 3.4 | 54.4 | 3.9 | 6.0 | 1.7 | 9.6 |
| Comparative Example 2 | 22.6 | 9.1 (29 mass%) | 0.0 | 56.4 | 4.0 | 6.2 | 1.7 | 9.9 |
| Comparative Example 3 | 8.7 | 18.1 (68 mass%) | 0.0 | 55.4 | 10.0 | 6.1 | 1.7 | 15.8 |
| Comparative Example 4 | 19.8 | 13.2 (40 mass%) | 0.0 | 52.2 | 8.0 | 5.6 | 1.2 | 13.1 |

### 2. Evaluation of geopolymer composition

Each geopolymer composition prepared as described above was used to perform a fluidity test, a bleeding test, and a uniaxial compressive strength test of a cured product of the geopolymer composition. The test method and test results are described in detail below.

### [Fluidity test of geopolymer composition]

The fluidity of the geopolymer composition was measured in accordance with a flow test specified in JIS R 5201:2015 (Physical testing methods for cement). However, the flow test was performed without tamping.

### [Bleeding test of geopolymer composition]

The bleeding test of the geopolymer composition was performed by the following method. A raw material for the geopolymer composition with a total volume of 1.5 L was kneaded, and then the kneaded composition was left for 1 hour. After a lapse of 1 hour, water floating on the surface of the composition left was sucked up with a dropper. Thereafter, the volume of the sucked up water was measured with a graduated cylinder, and the degree of occurrence of bleeding was evaluated.

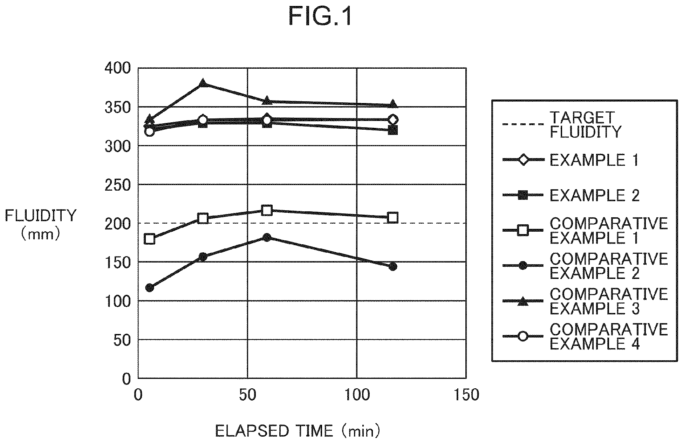

The measurement results of the fluidity (mm) of the geopolymer composition at each elapsed time (min) and the results of the bleeding test are summarized in Table 2 below. Moreover, the graph of FIG. 1 shows the fluidity test results of the geopolymer composition shown in Table 2 below. In FIG. 1, the target fluidity indicates 200 mm, which is the standard for the fluidity generally desired for geopolymer compositions.

**[Table 2]**

| | Fluidity (mm) at each elapsed time (min) | | | | Bleeding water after the passage of 60 minutes |
|---|---|---|---|---|---|
| | 5 min | 30 min | 60 min | 120 min | |
| Example 1 | 325 | 332 | 333 | 332 | None |
| Example 2 | 321 | 329 | 329 | 320 | None |
| Comparative Example 1 | 182 | 210 | 219 | 211 | None |
| Comparative Example 2 | 120 | 160 | 186 | 147 | None |
| Comparative Example 3 | 335 | 381 | 359 | 355 | Present (about 130 mL) |
| Comparative Example 4 | 319 | 337 | 333 | 333 | None |

### [Uniaxial compressive strength test of cured product of geopolymer composition]

The uniaxial compressive strength of the cured product of the geopolymer composition was measured by the following method. Each of the prepared geopolymer compositions was casted into a cylindrical mold having a diameter of 5 cm and a height of 10 cm, and sealed curing was carried out up to each day of age after casting shown in Table 2 below, and then the molded product was demolded. After demolding, the uniaxial compressive strength of the molded product was measured in accordance with JIS A 1108:2018.

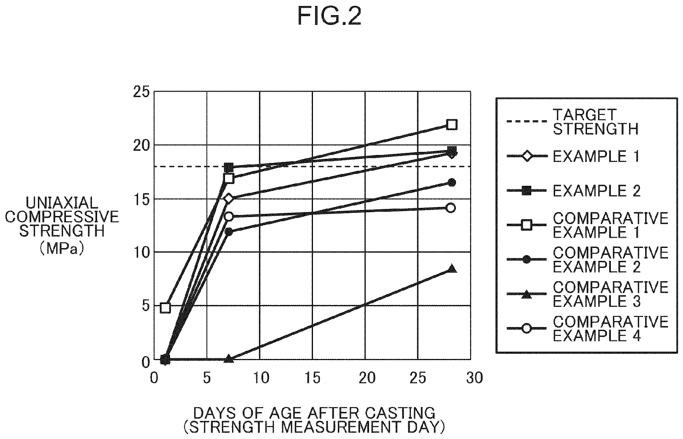

The measurement results of the uniaxial compressive strength test on each day of age after casting (strength measurement day) are shown in Table 3 below. Furthermore, the graph of FIG. 2 shows the results of the uniaxial compressive strength test of the cured product of the geopolymer composition shown in Table 3 below. The target strength in FIG. 2 indicates 18 MPa, which is a high strength criterion generally desired for cured products of geopolymer compositions.

**[Table 3]**

| | Uniaxial compressive strength (MPa) on each day of age after casting (strength measurement day) | | |
|---|---|---|---|
| | Day 1 | Day 7 | Day 28 |
| Example 1 | Disintegrated during preparation for measurement | 15.1 | 19.2 |
| Example 2 | Disintegrated during preparation for measurement | 17.9 | 19.4 |
| Comparative Example 1 | 4.8 | 16.9 | 21.9 |
| Comparative Example 2 | Disintegrated during preparation for measurement | 11.9 | 16.4 |
| Comparative Example 3 | Disintegrated during preparation for measurement | Disintegrated during preparation for measurement | 8.4 |
| Comparative Example 4 | Disintegrated during preparation for measurement | 13.3 | 14.1 |

### [Discussion]

As shown in Table 1 above, the geopolymer composition of Comparative Example 1 contains a large amount of silica fume. Therefore, as shown in the above Tables 2 and 3 and FIGS. 1 and 2, in the case of the geopolymer composition of Comparative Example 1, the target fluidity was more than 200 mm except at the elapsed time of 5 minutes, no bleeding occurred, and the strength of the cured product was more than the target strength on the 28th day. However, since the geopolymer composition of Comparative Example 1 contains a large amount of expensive silica fume, production cost will pile up if such a geopolymer composition is used to produce various cured bodies. In addition, with regard to the fluidity of the geopolymer composition, it is preferable if better fluidity is achieved.

Except that the geopolymer composition of Comparative Example 2 does not contain silica fume, the geopolymer composition of Comparative Example 2 is not significantly different from the geopolymer composition of Comparative Example 1 in the mixing ratio of other components. Specifically, the values of the mixing ratio of the ground granulated blast-furnace slag in the active filler and the total moisture content in the geopolymer composition of Comparative Example 2 are values almost similar to their respective values in the geopolymer composition of Comparative Example 1. However, in the case of the geopolymer composition of Comparative Example 2, the target fluidity was incapable of achieving 200 mm and also the strength of the cured product was incapable of achieving the target strength.

On the other hand, the geopolymer compositions of Example 1 and of Example 2 each do not contain silica fume as with the geopolymer composition of Comparative Example 2. However, as shown in Tables 2 and 3 and FIGS. 1 and 2 above, in the case of the geopolymer compositions of Example 1 and of Example 2, the fluidity was far more than the target fluidity of 200 mm over a long period of time, no bleeding occurred, and the strength of the cured product was more than the target strength on the 28th day. In particular, the geopolymer compositions of Example 1 and of Example 2 each had a fluidity of more than 300 mm over a long period of time, and were unexpectedly remarkably excellent even when compared to the typical traditional geopolymer composition of Comparative Example 1 containing a large amount of silica fume. This is assumed to be due to that in the case of the geopolymer compositions of Example 1 and of Example 2, a specific type of dispersant was contained, the mixing ratio of the ground granulated blast-furnace slag in the active filler was high, and the total moisture content was also adjusted to an appropriate amount.

That is, it is assumed that, in the case of Comparative Example 2 described above, a large amount of the silica fume was not contained as in the case of Comparative Example 1, and in addition, the mixing ratio of the ground granulated blast-furnace slag in the active filler was small and the total moisture content was also small, and thus the effects of fluidity and strength were not obtained.

The geopolymer compositions of Comparative Example 3 to Comparative Example 4 also do not contain silica fume. In the geopolymer composition of Comparative Example 3, the mixing ratio of the ground granulated blast-furnace slag in the active filler is high as in Example 1, but the total moisture content is excessively high. Therefore, the target fluidity of 200 mm was enabled to be achieved, but bleeding occurred, and the strength of the cured product was incapable of achieving the target strength. Also in the geopolymer composition of Comparative Example 4, the mixing ratio of the ground granulated blast-furnace slag in the active filler is high as in Example 1, but the total moisture content is large. Therefore, the target fluidity of more than 200 mm was achieved, and no bleeding occurred, but the strength of the cured product was incapable of achieving the target strength.

The present application is based on Japanese Patent Application No. 2023-000433 filed on January 5, 2023, the contents of which are included in the present application.

It should be understood that the embodiments and examples disclosed herein are exemplary in all respects and do not pose any limitation. The scope of the present invention is indicated by the scope of claims instead of the above description, and is intended to include meanings equivalent to the scope of claims and all modifications within the scope.

### Industrial Applicability

According to an embodiment of the present invention, there can be obtained a geopolymer composition capable of achieving both good fluidity over a long period of time and high strength development of a cured body in a short period of time by a simple technique while suppressing the mixing amount of silica fume. Therefore, the production cost of the geopolymer composition can be reduced. In particular, even when coal ash that is an industrial byproduct not subjected to to a treatment to conform to the standards of fly ash for use in concrete defined in JIS A 6201:2015 is contained as an active filler, a similar effect can be achieved, and thus the present invention is also suitable from an environmental perspective.

## Claims

1. geopolymer composition comprising: an active filler; aggregate; an activator; a dispersant; and added water,
wherein the geopolymer composition contains no silica fume or contains silica fume in an amount of less than 1 mass% based on a total mass of the geopolymer composition,
a total moisture content of the geopolymer composition is from 10 mass% to 13 mass%,
the active filler contains coal ash and 35 mass% or more of ground granulated blast-furnace slag based on a total mass of the active filler, and
the dispersant is a polycondensate-based dispersant that contains polyalkylene glycol monophenyl ether as a substructure.

2. The geopolymer composition according to claim 1, wherein the geopolymer composition contains no silica fume.

3. geopolymer cured body which is a cured product of the geopolymer composition according to claim 1 or 2.

4. method for producing a geopolymer cured body, comprising a step of mixing and kneading the geopolymer composition according to claim 1 or 2, and then curing the geopolymer composition.
